# EUROPEAN PATENT APPLICATION

(11) **EP 4 694 290 A1**
(43) Date of publication of application: **11.02.2026**
(21) Application number: 23929457.2
(22) Date of filing: 31.03.2023
(51) Int. Cl.: H04W 24/08

(54) **SENSING MEASUREMENT SETUP METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/085642
(87) International publication number: WO 2024/197874

(57) **Abstract**

Embodiments of the present disclosure relate to the technical field of mobile communications, and provide a sensing measurement setup method, an electronic device, and a storage medium. The sensing measurement setup method is applied to an access point device AP. The method comprises: determining a measurement setup request frame, wherein the measurement setup request frame comprises first identifier information, and the first identifier information indicates whether the measurement setup request frame comprises a user identifier (USID) allocated by the AP to a first station device; and sending the measurement setup request frame. The embodiments of the present disclosure provide a sensing measurement setup method, so as to further perfect a WLAN sensing process and satisfy wireless sensing requirements.

## Description

### TECHNICAL FIELD

The embodiments of the present disclosure relate to the technical field of mobile communication. Specifically, the embodiments of the present disclosure relate to a sensing measurement setup method, an electronic device, and a storage medium.

### BACKGROUND

In the Wi-Fi technologies currently being studied, wireless local area network (WLAN) sensing technology may be supported, for example, for location discovery, proximity detection, and presence detection in dense environments (such as home and corporate environments), and other application scenarios. At present, the WLAN Sensing procedure needs to be further improved to meet wireless sensing requirements.

### SUMMARY

The embodiments of the present disclosure provide a sensing measurement setup method, an electronic device, and a storage medium to further improve the WLAN Sensing procedure to meet wireless sensing requirements.

On the one hand, the embodiments of the present disclosure provide a sensing measurement setup method, which is applied to an access point device (AP), and the method includes:
determining a measurement setup request frame; where the measurement setup request frame includes first identification information, and the first identification information indicates whether the measurement setup request frame includes a user identifier (USID) allocated by the AP to a first station; and
sending the measurement setup request frame.

On the other hand, the embodiments of the present disclosure further provide a sensing measurement setup method, which is applied to a first station, and the method includes:
receiving a measurement setup request frame; where the measurement setup request frame includes first identification information, and the first identification information indicates whether the measurement setup request frame includes a user identifier (USID) allocated by an AP to the first station.

On the other hand, the embodiments of the present disclosure further provide an electronic device, where the electronic device is an access point device (AP), and the electronic device includes:
a determination module, configured to determine a measurement setup request frame; where the measurement setup request frame includes first identification information, and the first identification information indicates whether the measurement setup request frame includes a user identifier (USID) allocated by the AP to a first station; and
a sending module, configured to send the measurement setup request frame.

On the other hand, the embodiments of the present disclosure further provide an electronic device, where the electronic device is a first station, and the electronic device includes:
a receiving module, configured to receive a measurement setup request frame; where the measurement setup request frame includes first identification information, and the first identification information indicates whether the measurement setup request frame includes a user identifier (USID) allocated by an AP to the first station.

The embodiments of the present disclosure also provide an electronic device, including a memory, a processor, and a computer program stored in the memory and executable on the processor, where when the processor executes the program, one or more methods described in the embodiments of the present disclosure are implemented.

The embodiments of the present disclosure further provide a computer-readable storage medium, on which a computer program is stored. When the computer program is executed by a processor, one or more of the methods described in the embodiments of the present disclosure are implemented.

In the embodiments of the present disclosure, the AP determines a measurement setup request, the measurement setup request frame includes first identification information, and the first identification information indicates whether the measurement setup request frame includes a user identifier (USID) allocated by the AP to the first station, so as to facilitate clarifying the device identification of the first STA; the embodiments of the present disclosure provide a sensing measurement setup method to further improve the WLAN Sensing procedure and adapt to wireless sensing requirements.

Additional aspects and advantages of the embodiments of the present disclosure will be partially given in the description below, which will become apparent from the description below, or will be learned through the practice of the present disclosure.

### BRIEF DESCRIPTION OF THE DRAWINGS

In order to more clearly illustrate the technical solutions of the embodiments of the present disclosure, the drawings required for use in the description of the embodiments of the present disclosure will be briefly introduced below. Obviously, the drawings in the following description are only some embodiments of the present disclosure. For those skilled in the art, other drawings can be obtained based on these drawings without creative work.
FIG. 1 is a schematic diagram of a first example of an embodiment of the present disclosure;
FIG. 2 is a flowchart of a sensing measurement setup method according to an embodiment of the present disclosure;
FIG. 3 is a second flowchart of the sensing measurement setup method provided by an embodiment of the present disclosure;
FIG. 4 is a first schematic diagram of a structure of an electronic device provided by an embodiment of the present disclosure;
FIG. 5 is a second schematic diagram of a structure of the electronic device provided by an embodiment of the present disclosure;
FIG. 6 is a third schematic diagram of a structure of the electronic device provided by an embodiment of the present disclosure.

### DETAILED DESCRIPTION

Exemplary embodiments will be described in detail herein, examples of which are shown in the accompanying drawings. Unless otherwise indicated, when the following description refers to the drawings, the same numbers in different drawings represent the same or similar elements. The implementations described in the following exemplary embodiments do not represent all implementations consistent with the present disclosure. Instead, they are merely examples of apparatuses and methods consistent with some aspects of the present disclosure as detailed in the appended claims.

In the embodiments of the present disclosure, the terms used are only for the purpose of describing specific embodiments and are not intended to limit the present disclosure. The singular forms of "a/an", "said" and "the" used in the present disclosure and the appended claims are also intended to include plural forms, unless the context clearly indicates other meanings. It should also be understood that the term "and/or" used in the present disclosure refers to and includes any or all possible combinations of one or more associated listed items. For example, A and/or B can represent: A exists alone, A and B exist at the same time, and B exists alone. The character "/" generally indicates that the objects associated before and after are in an "or" relationship. The term "multiple/a plurality of" refers to two or more. In view of this, "multiple/a plurality of " can also be understood as "at least two" in the embodiments of the present disclosure.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the term "if" as used herein may be interpreted as "when" or "in a case" or "in response to determining".

Hereinafter, the technical solutions in the embodiments of the present disclosure are clearly and completely described in combination with the drawings in the embodiments of the present disclosure. Obviously, the described embodiments are only part of the embodiments of the present disclosure, not all of the embodiments. Based on the embodiments in the present disclosure, all other embodiments obtained by the person skilled in the art without making creative work are within the scope of protection of the present disclosure.

The embodiments of the present disclosure provide a sensing measurement setup method, an electronic device, and a storage medium to further improve the WLAN Sensing procedure to meet wireless sensing requirements.

The method and the apparatus are based on the same application concept. Since the method and the apparatus solve the problem in a similar principle, the implementations of the apparatus and the method can refer to each other, and the repeated parts will not be elaborated.

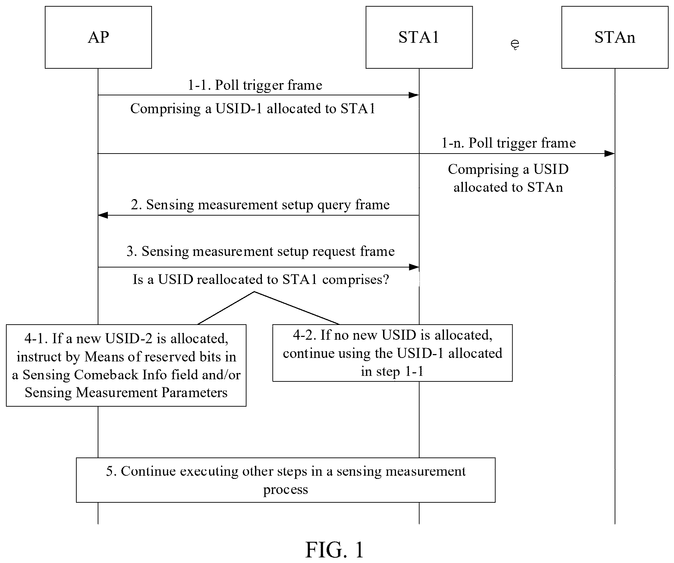

As a first example, referring to FIG. 1, which shows an example of an application scenario of the sensing measurement setup method provided by individual embodiments of the present disclosure; where the AP acts as a sensing initiator and performs WLAN sensing measurement under multiple connections with STA1 to STAn (Sensing Responder), and the WLAN sensing measurement may be a sensing measurement based on a trigger frame (Triggered Based Sounding, TB). As shown in FIG. 1, the method mainly includes the following steps.

In step 1-1, AP sends a Poll Trigger frame to STA1.

The Poll Trigger frame contains a User Info field (the field may also be a domain), and the User Info field contains a user identifier (USID) subfield and a sensing comeback (sensing comeback info) subfield corresponding to the USID subfield; where the USID subfield includes the USID (hereinafter referred to as USID-1) allocated by the AP to STA1 during the polling phase; if the comeback subfield is set to 1, it indicates that the AP needs to set up a new sensing measurement with STA1.

...

In step 1-n, the AP sends a Poll Trigger frame to STAn. In the process from step 1-1 to step 1-n, the AP sends Poll Trigger frames to multiple STAs to STAn respectively. For details, step 1-1 is referred to, which will not be repeated here.

It is understandable that there is no execution sequential restriction among individual steps 1 (step 1-1 to step 1-n).

In step 2, after receiving the poll trigger frame, the STA (for example, an unassociated STA) sends a sensing measurement procedure setup query frame to the AP and identifies its capability information again in the sensing measurement procedure setup query frame.

In step 3, after receiving the sensing measurement procedure setup query frame, the AP sends a sensing measurement setup request frame to the STA. The sensing measurement setup request frame carries the first identification information, indicating whether it includes the USID (hereinafter referred to as USID-2) reallocated to the STA.

Subsequently, depending on whether USID-2 is allocated to the STA, step 4-1 and step 4-2 are performed respectively.

In step 4-1, if a new USID-2 is allocated, then it is indicated by the reserved bit in the Sensing Comeback Info field and/or the Sensing Measurement Parameters field.

The AP sets the comeback bit to 0 in the measurement setup request frame, indicating that it sets up a new sensing measurement with the STA; and the first identification information is carried through the Sensing Comeback Info field and/or the Sensing Measurement Parameters field to indicate the allocation of USID-2 to the STA.

In step 4-2, if no new USID is allocated, USID-1 allocated in step 1-1 is used.

In step 5, the AP and STA1 subsequently continue to perform other step(s) of the sensing measurement procedure.

It is understandable that steps 2 to 5 are described only by taking STA1 as an example, and the interactions between other STAs and AP may refer to STA1.

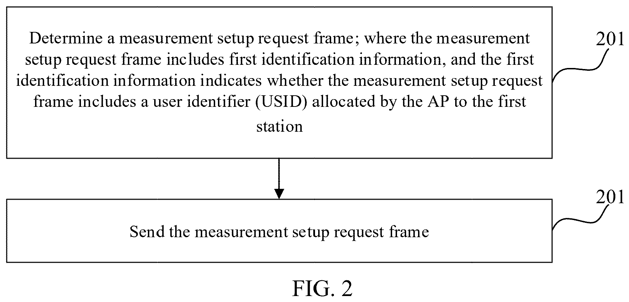

As shown in FIG. 2, an embodiment of the present disclosure provides a sensing measurement setup method. Optionally, the method may be applied to an access point (AP) device. Optionally, in the embodiments of the present disclosure, the AP is, for example, a device having a wireless to wired bridging function, and the AP is responsible for extending the service provided by the wired network to the wireless network. The station device (Station, STA) is, for example, an electronic device having a wireless network access function, and provides a frame delivery service to enable information to be delivered.

The method may include the following steps.

In step 201, a measurement setup request frame is determined; where the measurement setup request frame includes first identification information, and the first identification information indicates whether the measurement setup request frame includes a user identifier (USID) allocated by the AP to the first station.

In step 202, the measurement setup request frame is sent.

In WLAN Sensing, AP, as a Sensing initiator, can initiate the sensing measurement setup by sending a sensing measurement setup request message frame; after completing the sensing measurement setup, AP can initiate TF Sounding (including SR2SI and SR2SR), NDPA Sounding and other sensing measurements. In the frames exchanged during this process, the device identification of the STA as the Sensing Responder is usually included, such as the Association Identifier (AID) or the User Identifier (USID). Optionally, the byte length of the USID may be the same as that of the AID, occupying 2 bytes. Specifically, the AID is the unique identifier of the AP in the Basic Service Set (BSS) allocated by the AP to the STA after the initial association is completed, and the USID is allocated by the AP to the STA with which the AP sets up the initial association, and is allocated by the AP to the STA in the proxy sensing SBP response frame or the measurement setup request frame.

During the WLAN Sensing procedure, the AP determines a measurement setup request frame, where the measurement setup request frame is used to request the setup of the WLAN Sensing procedure; specifically, the measurement setup request frame includes first identification information, where the first identification information indicates whether the measurement setup request frame includes a USID allocated by the AP to the first station, where the USID can be used in the sensing measurement procedure, such as including a polling phase, a sounding and reporting (Reporting+LTF sec.update) procedure; where the sounding may include only a null data packet announcement sounding (NDPA sounding) or a triggered sounding (TF Sounding); it may also include both at the same time.

The first station may be an associated STA or an unassociated STA; the associated STA is a STA that has set up an initial association relationship with the AP, and the unassociated STA is a STA that has not set up the initial association relationship with the AP. When setting up the initial association relationship, for example, when the STA attempts to associate with the AP, it sends one association request frame to the AP, and the AP responds to the association request frame with an association response frame and allocates the AID to the STA.

Referring to step 1 in FIG. 1, in the polling phase, the USID subfield in the Poll Trigger frame of the AP may carry the USID allocated by the AP to the STA (hereinafter the USID allocated in the polling phase is referred to as USID-1); therefore, after the AP subsequently sends a measurement setup request frame, a new USID (hereinafter the USID allocated in the sensing measurement setup phase is referred to as USID-2) may be allocated to the STA, or it may not be allocated. Therefore, in the embodiment of the present disclosure, the first identification information is used to indicate whether the measurement setup request frame includes the USID-2 allocated by the AP to the first STA, to facilitate identifying the device identifier of the first STA, so as to further improve the WLAN Sensing procedure and meet the wireless sensing requirement.

Optionally, in the embodiments of the present disclosure, the first identification information includes at least one of the following:
receiving address (RA) information of the measurement setup request frame;
adding identification information in the measurement setup request frame.

When the first identification information includes the receiving address (RA) information, it can be determined whether a USID is allocated to the first station based on the RA information; for example, it can be determined whether the RA information is associated with a USID.

When the first identification information includes the added identification information, a new bit may be added into the measurement setup request frame to indicate it, for example, in the sensing comeback information field and/or the sensing measurement parameter field.

If USID is not included, or the USID field is set to a reserved bit, the STA can determine the AP through the transmitter address (TA) and use the previously allocated USID.

The embodiment of the present disclosure provides a sensing measurement setup method, which is applied to an access point device (AP). The method includes:
determining a measurement setup request frame; where the measurement setup request frame includes first identification information, and the first identification information indicates whether the measurement setup request frame includes a user identifier (USID) allocated by the AP to the first station; and
sending the measurement setup request frame.

The first identification information is carried in a sensing comeback information (Sensing Comeback Info) field and/or a sensing measurement parameter field (Sensing Measurement Parameters) of the measurement setup request frame, that is, the first identification information is carried in at least one of the Sensing Comeback Info field and the Sensing Measurement Parameters field.

As an example, the Sensing Comeback Info field is carried in the action field of the measurement setup request frame, and the action field format of the measurement setup request frame is shown in the following Table 1:

**Table 1:**

| Information Content | Category | Public Action/Protected Dual of Public Action | Dialog Token (DialogToken) | Sensing Comeback Info | Measurement Setup Identification (Measurement Setup ID) | Sensing Measurement Parameters Element |
|---|---|---|---|---|---|---|
| Number of bytes (Octets) | 1 | 1 | 1 | 1 | 1 | 0 or variable |

The format of the Sensing Comeback Info field is further shown in Table 2 below:

**Table 2:**

| Content | Comeback | Unassociated STA Comeback After Exponent | Unassociated STA Comeback before Exponent | Reserved |
|---|---|---|---|---|
| Bits | 1 | 3 | 2 | 2 |
| Bits Bit Order | B0 | B1 to B3 | B4 to B5 | B6 to B7 |

The first identification information may be carried in the reserved bit of the Sensing Comeback Info field. For example, if the first identification information is set to 1, the identification measurement setup request frame includes the user identifier (USID) allocated by the AP to the first station; for example, if the first identification information is set to 0, the identification measurement setup request frame does not include the user identifier (USID) allocated by the AP to the first station.

The Sensing Measurement Parameters field may be carried in the sensing measurement parameter element of the measurement setup request frame, as shown in Table 1; further, the format of the sensing measurement parameter element is shown in Table 3:

**Table 3:**

| Information Content | Element Identification (Element ID) | Length | Element ID Extension | Sensing Measurement Parameter Field (Sensing Measurement Parameters) | Sensing subelements |
|---|---|---|---|---|---|
| Number of bytes (Octets) | 1 | 1 | 1 | 5 | Variable |

For example, one bit in the reserved field of the Sensing Measurement Parameter field in Table 3 is used to identify the first identification information. For example, if the first identification information is set to 1, it indicates that the measurement setup request frame includes the user identifier (USID) allocated by the AP to the first station; for example, if the first identification information is set to 0, it indicates that the measurement setup request frame does not include the user identifier (USID) allocated by the AP to the first station, then the format of the Sensing Measurement Parameter field is as shown in the following Table 4:

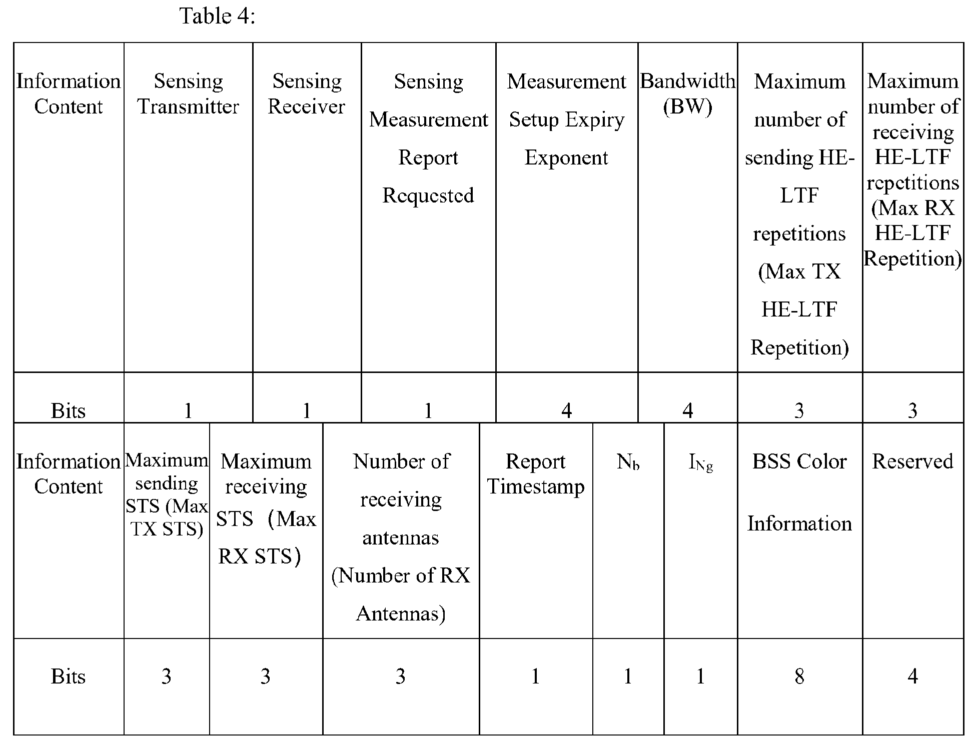

The embodiments of the present disclosure provide a sensing measurement setup method, which is applied to an access point device (AP). The method includes:
determining a measurement setup request frame; where the measurement setup request frame includes first identification information, and the first identification information indicates whether the measurement setup request frame includes a user identifier (USID) allocated by the AP to the first station; and
sending the measurement setup request frame.

The measurement setup request frame includes second identification information, and the second identification information indicates whether the AP sets up a new sensing measurement procedure with the first station. For example, the second identification information is set to 0, indicating that the AP sets up a new sensing measurement procedure with the first station, and the second identification information is set to 1, indicating that the AP does not set up a new sensing measurement procedure with the first station. Optionally, the second identification information may be the Comeback identification bit of the Sensing Comeback Info field in Table 2.

The embodiments of the present disclosure provide a sensing measurement setup method, which is applied to an access point device (AP). The method includes:
determining a measurement setup request frame; where the measurement setup request frame includes first identification information, and the first identification information indicates whether the measurement setup request frame includes a user identifier (USID) allocated by the AP to the first station; and
sending the measurement setup request frame.

The measurement setup request frame includes second identification information, where the second identification information indicates whether the AP sets up a new sensing measurement procedure with the first station.

The first identification information indicates that the measurement setup request frame includes the USID, and the second identification information indicates that the AP sets up a new sensing measurement procedure with the first station, then the USID is a subelement of the sensing measurement parameter element of the measurement setup request frame.

When the AP sets the first identification information (such as the reserved bit in the sensing comeback info field) and the second identification information (such as the Comeback identification bit in the Sensing Comeback Info field) to 1, it indicates that the sensing measurement setup request frame includes the USID-2 allocated by the AP to the first STA; the USID-2 may appear in the format of a subelement.

As an example, the subelement of the sensing measurement parameter element is shown in Table 5 below:

**Table 5:**

| Subelement identification (subelement ID) | Name | Extensible |
|---|---|---|
| 0 | Non-TB Sensing Specific subelement | Yes |
| 1 | TB Sensing Specific subelement | Yes |
| 2 | For example: newly allocated USID | To be determined |
| 3 to 255 | Reserved | |

The present disclosure provides a sensing measurement setup method, which is applied to an access point device (AP). The method includes:
determining a measurement setup request frame; where the measurement setup request frame includes first identification information, and the first identification information indicates whether the measurement setup request frame includes a user identifier (USID) allocated by the AP to the first station; and
sending the measurement setup request frame.

The measurement setup request frame includes second identification information, and the second identification information indicates whether the AP sets up a new sensing measurement procedure with the first station.

The first identification information indicates that the measurement setup request frame does not include the USID, and the second identification information indicates that the AP sets up a new sensing measurement procedure with the first station, then the AP allocates a unique measurement identifier for the sensing measurement procedure. When the AP sets up a new sensing measurement procedure with the first station and no longer allocates a new USID to the first station, then when setting up a new sensing measurement procedure with the first station, a new measurement ID is allocated to the new sensing measurement procedure so as to distinguish it from the previous sensing measurement procedure.

The embodiments of the present disclosure provide a sensing measurement setup method, which is applied to an access point device (AP). The method includes:
sending a poll trigger frame;
where the poll trigger frame includes a user information (User Info) field; the user information field includes a USID subfield and a sensing comeback subfield; the sensing comeback subfield identifies whether the AP sets up a new sensing measurement procedure with the station (which may include the first station in the embodiment of the present disclosure) corresponding to the USID subfield; where the USID subfield includes the USID (hereinafter referred to as USID-1) allocated by the AP to STA1 during the polling phase; the Comeback subfield is set to 1, indicating that the AP needs to set up a new sensing measurement with STA1;
determining a measurement setup request frame; where the measurement setup request frame includes first identification information, and the first identification information indicates whether the measurement setup request frame includes a user identifier (USID) (USID-2) allocated by the AP to the first station; and
sending the measurement setup request frame.

The embodiments of the present disclosure provide a sensing measurement setup method, which is applied to an access point device (AP). The method includes:
sending a poll trigger frame; where the poll trigger frame includes a user information field;
the user information field includes a USID subfield and a sensing comeback subfield; the sensing comeback subfield identifies whether the AP sets up a new sensing measurement procedure with the station corresponding to the USID subfield;
receiving a sensing measurement procedure setup query frame sent by the station; where the sensing measurement procedure setup query frame includes the sensing measurement capability information of the station; after receiving the poll trigger frame, the STA (e.g., an unassociated STA) sends a sensing measurement procedure setup query frame to the AP, and identifies its capability information again in the sensing measurement procedure setup query frame;
determining a measurement setup request frame; where the measurement setup request frame includes first identification information, and the first identification information indicates whether the measurement setup request frame includes a user identifier (USID) allocated by the AP to the first station; and
sending the measurement setup request frame.

The embodiments of the present disclosure provide a sensing measurement setup method, which is applied to an access point device (AP). The method includes:
determining a measurement setup request frame; where the measurement setup request frame includes first identification information, and the first identification information indicates whether the measurement setup request frame includes a user identifier (USID) allocated by the AP to the first station; and
sending the measurement setup request frame.

Optionally, the first identification information is carried in a sensing comeback information field and/or a sensing measurement parameter field of the measurement setup request frame.

Optionally, the measurement setup request frame includes second identification information, and the second identification information indicates whether the AP sets up a new sensing measurement procedure with the first station.

Optionally, the first identification information indicates that the measurement setup request frame includes the USID, and the second identification information indicates that the AP sets up a new sensing measurement procedure with the first station, then the USID is a subelement of the sensing measurement parameter element of the measurement setup request frame.

Optionally, the first identification information indicates that the measurement setup request frame does not include the USID, and the second identification information indicates that the AP sets up a new sensing measurement procedure with the first station, then the AP allocates a unique measurement identifier for the sensing measurement procedure.

Optionally, before determining the measurement setup request frame, the method includes:
sending a poll trigger frame; where the poll trigger frame includes a user information field;
the user information field includes a USID subfield and a sensing comeback subfield; the sensing comeback subfield identifies whether the AP sets up a new sensing measurement procedure with the station corresponding to the USID subfield.

Optionally, after sending the poll trigger frame, the method further includes:
receiving a sensing measurement procedure setup query frame sent by the station; where the sensing measurement procedure setup query frame includes sensing measurement capability information of the station.

Optionally, the first identification information includes at least one of the following:
receiving address (RA) information of the measurement setup request frame;
adding identification information in the measurement setup request frame.

In the embodiments of the present disclosure, the AP determines a measurement setup request, and the measurement setup request frame includes first identification information, and the first identification information indicates whether the measurement setup request frame includes a user identifier (USID) allocated by the AP to the first station, so as to facilitate clarifying the device identifier of the first STA; the embodiments of the present disclosure provide a sensing measurement setup method to further improve the WLAN Sensing procedure and adapt to wireless sensing needs.

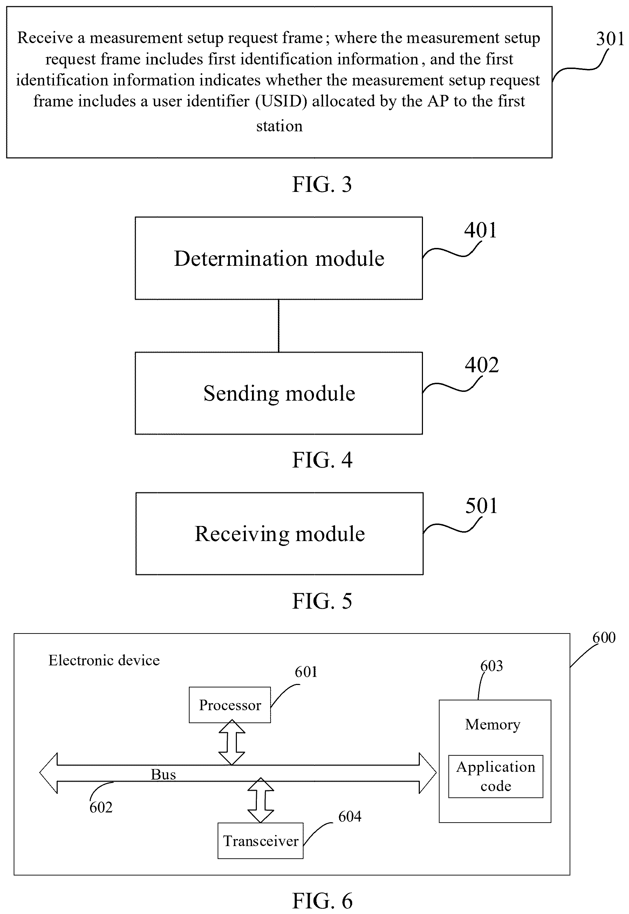

Referring to FIG. 3, an embodiment of the present disclosure provides a sensing measurement setup method. Optionally, the method may be applied to a first station, where the first station may be a STA that has set up an initial association with the AP or has not set up an initial association with the AP. The method may include the following steps.

In step 301: a measurement setup request frame is received; where the measurement setup request frame includes first identification information, and the first identification information indicates whether the measurement setup request frame includes a user identifier (USID) allocated by the AP to the first station.

In WLAN Sensing, AP, as a Sensing initiator, may initiate the sensing measurement setup by sending a sensing measurement setup request message frame; after completing the sensing measurement setup, AP may initiate sensing measurements such as TF Sounding (including SR2SI and SR2SR) and NDPA Sounding. In this procedure, the frames exchanged usually contain the device identification of the STA as the Sensing Responder, such as the Association Identifier (AID) or the User Identifier (USID). Optionally, the byte length of USID may be the same as that of AID, occupying 2 bytes. Specifically, AID is the unique identifier of AP in the basic service set (BSS) allocated by AP to STA after the initial association is completed, and USID is allocated by AP to STA with which AP has set up an initial association, for example, AP sends it to STA through an association response frame or a proxy sensing SBP response frame.

During the WLAN Sensing procedure, the first station receives a Measurement Setup Request frame, where the measurement setup request frame is used to request to set up the WLAN Sensing procedure; specifically, the measurement setup request frame includes first identification information, where the first identification information indicates whether the measurement setup request frame includes a USID allocated by the AP to the first station, where the USID may be used in the sensing measurement procedure, such as including a polling phase, a sounding and reporting (Reporting+LTF sec.update) procedure; where the sounding may include only a null data packet announcement sounding (NDPA sounding) or a triggered sounding (TF Sounding); it may also include both.

The first station may be an associated STA or an unassociated STA; the associated STA is a STA that has set up an initial association relationship with the AP, and the unassociated STA is a STA that has not set up an initial association relationship with the AP. When setting up an initial association, for example, when the STA attempts to associate with the AP, it sends one association request frame to the AP, and the AP responds to the association request frame with an association response frame and allocates an AID to the STA.

Referring to the first step in FIG. 1, during the polling phase, the AP may carry the USID allocated by the AP to the STA (hereinafter USID allocated in the polling phase is referred to as USID-1) in the USID subfield in the Poll Trigger frame; therefore, after the AP subsequently sends a measurement setup request frame, a new USID (hereinafter the USID allocated for the sensing measurement setup phase is referred to as USID-2) may be allocated to the STA, or it may not be allocated. Therefore, in the embodiments of the present disclosure, the first identification information is used to indicate whether the measurement setup request frame includes the USID-2 allocated by the AP to the first STA, so as to clarify the device identification of the first STA, to further improve the WLAN Sensing procedure and adapt to the wireless sensing requirement.

Optionally, in the embodiments of the present disclosure, the first identification information includes at least one of the following:
receiving address (RA) information of the measurement setup request frame;
adding identification information in the measurement setup request frame.

When the first identification information includes the receiving address (RA) information, it may be determined whether a USID is allocated to the first station based on the RA information; for example, it may be determined whether the RA information is associated with a USID.

When the first identification information includes the added identification information, it can be indicated by adding a bit in the measurement setup request frame, for example, in the sensing comeback information field and/or the sensing measurement parameter field. If the USID is not included, or the USID field is set to a reserved bit, the STA may determine the AP through the transmitter address (TA) and use the previously allocated USID.

The embodiments of the present disclosure provide a sensing measurement setup method. Optionally, the method may be applied to a first station. The method may include the following steps:
receiving a measurement setup request frame; where the measurement setup request frame includes first identification information, and the first identification information indicates whether the measurement setup request frame includes a user identifier (USID) allocated by the AP to the first station.

The first identification information is carried in a sensing comeback information (Sensing Comeback Info) field and/or a sensing measurement parameter field (Sensing Measurement Parameters) of the measurement setup request frame, that is, the first identification information is carried in at least one of the Sensing Comeback Info field and the Sensing Measurement Parameters field.

As an example, the Sensing Comeback Info field carries the action field of the measurement setup request frame, the action field format of the measurement setup request frame is as shown in the aforementioned Table 1. Among them, the format of the Sensing Comeback Info field is further as shown in the aforementioned Table 2, and the first identification information may be carried in the reserved bit of the Sensing Comeback Info field, for example, the first identification information is set to 1, indicating that the measurement setup request frame includes the user identifier (USID) allocated by the AP to the first station; for example, the first identification information is set to 0, indicating that the measurement setup request frame does not include the user identifier (USID) allocated by the AP to the first station.

The Sensing Measurement Parameters field may be carried in the sensing measurement parameter element of the measurement setup request frame, as shown in Table 1; further, the format of the sensing measurement parameter element is as shown in Table 3 above, for example, one bit in the reserved field in the Sensing Measurement Parameter field in Table 3 is used to identify the first identification information. For example, the first identification information is set to 1, indicating that the measurement setup request frame includes the user identifier (USID) allocated by the AP to the first station; for example, the first identification information is set to 0, indicating that the measurement setup request frame does not include the user identifier (USID) allocated by the AP to the first station, then the format of the Sensing Measurement Parameter field is as shown in Table 4 above, which will not be repeated here.

The embodiment of the present disclosure provides a sensing measurement setup method. Optionally, the method may be applied to a first station. The method may include the following steps
receiving a measurement setup request frame; where the measurement setup request frame includes first identification information, and the first identification information indicates whether the measurement setup request frame includes a user identifier (USID) allocated by the AP to the first station.

The measurement setup request frame includes second identification information, and the second identification information indicates whether the AP sets up a new sensing measurement procedure with the first station. For example, the second identification information is set to 0, indicating that the AP sets up a new sensing measurement procedure with the first station, and the second identification information is set to 1 to indicate that the AP does not set up a new sensing measurement procedure with the first station. Optionally, the second identification information may be the Comeback identification bit of the Sensing Comeback Info field in Table 2.

The embodiment of the present disclosure provides a sensing measurement setup method. Optionally, the method may be applied to a first station, and the method may include the following steps:
receiving a measurement setup request frame; where the measurement setup request frame includes first identification information, and the first identification information indicates whether the measurement setup request frame includes a user identifier (USID) allocated by the AP to the first station.

The first identification information indicates that the measurement setup request frame includes the USID, and the second identification information indicates that the AP sets up a new sensing measurement procedure with the first station, then the USID is a subelement of the sensing measurement parameter element of the measurement setup request frame.

When the AP sets the first identification information (such as the reserved bit in the sensing comeback info field) and the second identification information (such as the Comeback identification bit in the Sensing Comeback Info field) to 1, it identifies that the sensing measurement setup request frame includes the USID-2 allocated by the AP to the first STA; the USID-2 may appear in the format of a subelement.

The embodiment of the present disclosure provides a sensing measurement setup method. Optionally, the method may be applied to a first station. The method may include the following steps:
receiving a measurement setup request frame; where the measurement setup request frame includes first identification information, and the first identification information indicates whether the measurement setup request frame includes a user identifier (USID) allocated by the AP to the first station.

The first identification information indicates that the measurement setup request frame includes the USID, and the second identification information indicates that the AP sets up a new sensing measurement procedure with the first station, and the USID is a subelement of the sensing measurement parameter element of the measurement setup request frame.

The first identification information indicates that the measurement setup request frame does not include the USID, and the second identification information indicates that the AP sets up a new sensing measurement procedure with the first station, then the AP allocates a unique measurement identifier for the sensing measurement procedure. When the AP sets up a new sensing measurement procedure with the first station and no longer allocates a new USID to the first station, when setting up a new sensing measurement procedure with the first station, a new measurement ID is allocated to the new sensing measurement procedure to distinguish it from the previous sensing measurement procedure.

The embodiment of the present disclosure provides a sensing measurement setup method. Optionally, the method may be applied to a first station. The method may include the following steps:
receiving a poll trigger frame;
where the poll trigger frame includes a user information (User Info) field; the user information field includes a USID subfield and a sensing Comeback subfield; the sensing comeback subfield identifies whether the AP sets up a new sensing measurement procedure with a station (which may include the first station in the embodiment of the present disclosure) corresponding to the USID subfield; the USID subfield includes a USID (hereinafter referred to as USID-1) allocated by the AP to STA1 during the polling phase; if the Comeback subfield is set to 1, it identifies that the AP needs to set up a new sensing measurement with STA1;
receiving a measurement setup request frame; where the measurement setup request frame includes first identification information, and the first identification information indicates whether the measurement setup request frame includes a user identifier (USID) allocated by the AP to the first station.

The embodiment of the present disclosure provides a sensing measurement setup method. Optionally, the method may be applied to a first station. The method may include the following steps:
receiving a poll trigger frame; where the poll trigger frame includes a user information field;
the user information field includes a USID subfield and a sensing comeback subfield; the sensing comeback subfield identifies whether the AP sets up a new sensing measurement procedure with the station corresponding to the USID subfield.

A sensing measurement procedure setup query frame is sent, and the sensing measurement capability information of the first station is carried in the sensing measurement procedure setup query frame; after receiving the poll trigger frame, the STA (for example, an unassociated STA) sends a sensing measurement procedure setup query frame to the AP, and identifies its capability information again in the sensing measurement procedure setup query frame.

A measurement setup request frame is received; where the measurement setup request frame includes first identification information, and the first identification information indicates whether the measurement setup request frame includes a user identifier (USID) allocated by the AP to the first station.

The embodiment of the present disclosure provides a sensing measurement setup method. Optionally, the method may be applied to a first station, and the method may include the following steps:
receiving a measurement setup request frame; where the measurement setup request frame includes first identification information, and the first identification information indicates whether the measurement setup request frame includes a user identifier (USID) allocated by the AP to the first station.

Optionally, the first identification information is carried in a sensing comeback information field and/or a sensing measurement parameter field of the measurement setup request frame.

Optionally, the measurement setup request frame includes second identification information, and the second identification information indicates whether the AP sets up a new sensing measurement procedure with the first station.

Optionally, the first identification information indicates that the measurement setup request frame includes the USID, and the second identification information indicates that the AP sets up a new sensing measurement procedure with the first station, and the USID is a subelement of the sensing measurement parameter element of the measurement setup request frame.

Optionally, the first identification information indicates that the measurement setup request frame does not include the USID, and the second identification information indicates that the AP sets up a new sensing measurement procedure with the first station, then the AP allocates a unique measurement identifier for the sensing measurement procedure.

Optionally, before receiving the measurement setup request frame, the method includes:
receiving a poll trigger frame; where the poll trigger frame includes a user information field;
the user information field includes a USID subfield and a sensing comeback subfield; the sensing comeback subfield identifies whether the AP sets up a new sensing measurement procedure with the station corresponding to the USID subfield.

Optionally, after receiving the poll trigger frame, the method further includes:
sending a sensing measurement procedure setup query frame, where the sensing measurement procedure setup query frame carries the sensing measurement capability information of the first station.

Optionally, the first identification information includes at least one of the following:
receiving address (RA) information of the measurement setup request frame;
adding identification information in the measurement setup request frame.

In the embodiments of the present disclosure, the sensing responder receives a measurement setup request frame; where the measurement setup request frame includes first identification information, and the sensing responder, by learning the type of the measurement procedure requested by the measurement setup request frame, determines whether the measurement setup request frame includes the USID allocated by the AP to the first station according to the first identification information; the embodiments of the present disclosure provide a sensing measurement setup method to further improve the WLAN Sensing procedure and adapt to wireless sensing requirements.

Referring to FIG. 4, based on the same principle as the method provided in the embodiments of the present disclosure, the embodiment of the present disclosure further provides an electronic device, the electronic device is an access point device (AP), and the electronic device includes:
a determination module 401, configured to determine a measurement setup request frame; where the measurement setup request frame includes first identification information, and the first identification information indicates whether the measurement setup request frame includes a user identifier (USID) allocated by the AP to the first station; and
a sending module 402, configured to send the measurement setup request frame.

The embodiment of the present disclosure further provides a sensing measurement setup apparatus, which is applied to an access point device (AP), and the apparatus includes:
a request determination module, configured to determine a measurement setup request frame; where the measurement setup request frame includes first identification information, and the first identification information indicates whether the measurement setup request frame includes a user identifier (USID) allocated by the AP to the first station; and
a first request sending module, configured to send the measurement setup request frame.

The apparatus further includes other modules of the electronic device in the aforementioned embodiments, which will not be described in detail here.

Referring to FIG. 5, based on the same principle as the method provided in the embodiments of the present disclosure, the embodiment of the present disclosure further provides an electronic device, the electronic device is an access point device (AP), and the electronic device includes:
a receiving module 501, configured to receive a measurement setup request frame, where the measurement setup request frame includes first identification information, and the first identification information indicates whether the measurement setup request frame includes a user identifier (USID) allocated by the AP to the first station.

The embodiment of the present disclosure further provides a sensing measurement setup apparatus, which is applied to an access point device (AP), and the apparatus includes:
a request receiving module, configured to receive a measurement setup request frame; where the measurement setup request frame includes first identification information, and the first identification information indicates whether the measurement setup request frame includes a user identifier (USID) allocated by the AP to the first station.

The apparatus further includes other modules of the electronic device in the aforementioned embodiments, which will not be described in detail here.

In an optional embodiment, the embodiment of the present disclosure further provides an electronic device, as shown in FIG. 6, the electronic device 600 shown in FIG. 6 may be a server, including: a processor 601 and a memory 603. The processor 601 and the memory 603 are connected, such as through a bus 602. Optionally, the electronic device 600 may further include a transceiver 604. It should be noted that in actual applications, the transceiver 604 is not limited to one, and the structure of the electronic device 600 does not constitute a limitation on the embodiments of the present disclosure.

The processor 601 may be a Central Processing Unit (CPU), a general-purpose processor, a Digital Signal Processor (DSP), an Application Specific Integrated Circuit (ASIC), a Field Programmable Gate Array (FPGA) or other programmable logic devices, transistor logic devices, hardware components or any combination thereof. It can implement or execute various exemplary logic blocks, modules and circuits described in conjunction with the content of the present disclosure. The processor 601 can also be a combination that implements computing functions, such as a combination of one or more microprocessors, a combination of a DSP and a microprocessor, etc.

The bus 602 may include a path for transmitting information between the above components. The bus 602 may be a Peripheral Component Interconnect (PCI) bus or an Extended Industry Standard Architecture (EISA) bus, etc. The bus 602 may be divided into an address bus, a data bus, a control bus, etc. For ease of representation, only one thick line is used in FIG. 6, but it does not mean that there is only one bus or one type of bus.

The memory 603 may be a Read Only Memory (ROM) or other types of static storage devices that can store static information and instructions, a Random Access Memory (RAM) or other types of dynamic storage devices that can store information and instructions, or an Electrically Erasable Programmable Read Only Memory (EEPROM), a Compact Disc Read Only Memory (CD-ROM) or other optical disk storage, optical disc storage (including compressed discs, laser discs, CDs, digital versatile discs, Blu ray discs, etc.), a disk storage medium or other magnetic storage device, or any other medium that can be used to carry or store desired program code in the form of instructions or data structures and can be accessed by a computer, but is not limited thereto.

The memory 603 is used to store application code for executing the solutions of the present disclosure, and the execution is controlled by the processor 601. The processor 601 is used to execute the application code stored in the memory 603 to implement the content shown in the above method embodiments.

The electronic devices include, but are not limited to, mobile phones, laptop computers, digital broadcast receivers, personal digital assistants (PDAs), tablet computers (PADs), portable multimedia players (PMPs), vehicle-mounted terminals (such as vehicle-mounted navigation terminals), etc., and fixed terminals such as digital TVs, desktop computers, etc. The electronic device shown in FIG. 6 is only an example and should not bring any limitation to the functions and scope of use of the embodiments of the present disclosure.

The server provided by the present disclosure may be an independent physical server, or a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, CDN, and big data and artificial intelligence platforms. The terminal may be a smart phone, a tablet computer, a laptop computer, a desktop computer, a smart speaker, a smart watch, etc., but is not limited thereto. The terminal and the server may be directly or indirectly connected via wired or wireless communication, which is not limited by the present disclosure.

An embodiment of the present disclosure provides a computer-readable storage medium, on which a computer program is stored. When the computer-readable storage medium is run on a computer, the computer can execute the corresponding contents of the aforementioned method embodiments.

It should be understood that, although the steps in the flowchart of the accompanying drawings are displayed in sequence as indicated by the arrows, these steps are not necessarily executed in sequence in the order indicated by the arrows. Unless otherwise specified herein, there is no strict order restriction on the execution of these steps, and they can be executed in other orders. Moreover, at least a part of the steps in the flowchart of the accompanying drawings may include multiple sub-steps or multiple stages, and these sub-steps or stages are not necessarily executed at the same time, but can be executed at different moments, and their execution order is not necessarily sequential, but can be executed in turn or alternately with other steps or at least a part of the sub-steps or stages of other steps.

It should be noted that the computer-readable medium disclosed above may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program that may be used by or in combination with an instruction execution system, apparatus or device. In the present disclosure, the computer-readable signal medium may include a data signal propagated in a baseband or as part of a carrier wave, in which a computer-readable program code is carried. This propagated data signal may take a variety of forms, including but not limited to an electromagnetic signal, an optical signal, or any suitable combination of the above. The computer readable signal medium may also be any computer-readable medium other than a computer readable storage medium, which may send, propagate or transmit a program for use by or in conjunction with an instruction execution system, apparatus or device. The program code contained on the computer-readable medium may be transmitted using any suitable medium, including but not limited to: wires, optical cables, radio frequency (RF), etc., or any suitable combination of the above.

The above-mentioned computer-readable medium may be included in the electronic device, or may exist independently without being installed in the electronic device.

The above-mentioned computer-readable medium carries one or more programs. When the one or more programs are executed by the electronic device, the electronic device is enabled to execute the method shown in the above embodiments.

According to one aspect of the present disclosure, a computer program product or a computer program is provided. The computer program product or the computer program includes computer instructions, and the computer instructions are stored in a computer-readable storage medium. A processor of a computer device reads the computer instructions from the computer-readable storage medium, and the processor executes the computer instructions, so that the computer device executes the methods provided in the above-mentioned various optional implementations.

The computer program code for performing operations of the present disclosure may be written in one or more programming languages, or a combination thereof, including object-oriented programming languages, such as Java, Smalltalk, C++, as well as conventional procedural programming languages, such as "C" language or similar programming languages. The program code may be executed entirely on the user's computer, partially on the user's computer, as a separate software package, partially on the user's computer and partially on a remote computer, or entirely on a remote computer or server. In the case of a remote computer, the remote computer may be connected to the user's computer through any type of network, including a local area network (LAN) or a wide area network (WAN), or may be connected to an external computer (e.g., through the Internet using an Internet service provider).

The flowcharts and block diagrams in the accompanying drawings illustrate the possible architecture, function and operation of the system, method and computer program product according to various embodiments of the present disclosure. In this regard, each square box in the flowcharts or block diagrams can represent one module, program segment or a part of a code, and the module, the program segment or a part of the code contains one or more executable instructions for realizing the specified logical function. It should also be noted that in some implementations as replacements, the functions marked in the square box can also occur in a sequence different from that marked in the accompanying drawings. For example, two square boxes represented in succession can actually be executed substantially in parallel, and they can sometimes be executed in the opposite order, depending on the functions involved. It should also be noted that each square box in the block diagrams and/or flowcharts, and the combination of the square boxes in the block diagrams and/or flowcharts can be implemented with a dedicated hardware-based system that performs a specified function or operation, or can be implemented with a combination of dedicated hardware and computer instructions.

The modules described in the embodiments of the present disclosure may be implemented by software or hardware. The name of the module does not limit the module itself in some cases. For example, module A may also be described as "module A for performing operation B".

The above description is only the preferred embodiments of the present disclosure and the explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, the above features are replaced with the technical features with similar functions disclosed in the present disclosure (but not limited to) by each other.

## Claims

1. A sensing measurement setup method, applied to an access point device (AP), the method comprising:
determining a measurement setup request frame; wherein the measurement setup request frame comprises first identification information, and the first identification information indicates whether the measurement setup request frame comprises a user identifier (USID) allocated by the AP to a first station; and
sending the measurement setup request frame.

2. The sensing measurement setup method according to claim 1, wherein the first identification information is carried in a sensing comeback information field and/or a sensing measurement parameter field of the measurement setup request frame.

3. The sensing measurement setup method according to claim 1 or 2, wherein the measurement setup request frame comprises second identification information, and the second identification information indicates whether the AP sets up a new sensing measurement procedure with the first station.

4. The sensing measurement setup method according to claim 3, wherein the first identification information indicates that the measurement setup request frame comprises the USID, and the second identification information indicates that the AP sets up a new sensing measurement procedure with the first station, then the USID is a subelement of a sensing measurement parameter element of the measurement setup request frame.

5. The sensing measurement setup method according to claim 3, wherein the first identification information indicates that the USID is not comprised in the measurement setup request frame, and the second identification information indicates that the AP sets up a new sensing measurement procedure with the first station, then the AP allocates a unique measurement identifier for the sensing measurement procedure.

6. The sensing measurement setup method according to claim 1, wherein before determining the measurement setup request frame, the method comprises:
sending a poll trigger frame; wherein the poll trigger frame comprises a user information field;
the user information field comprises a USID subfield and a sensing comeback subfield; the sensing comeback subfield identifies whether the AP sets up a new sensing measurement procedure with a station corresponding to the USID subfield.

7. The sensing measurement setup method according to claim 6, wherein after sending the poll trigger frame, the method further comprises:
receiving a sensing measurement procedure setup query frame sent by the station; wherein the sensing measurement procedure setup query frame comprises sensing measurement capability information of the station.

8. The sensing measurement setup method according to any one of claims 1, 6 to 7, wherein the first identification information comprises at least one of:
receiving address (RA) information of the measurement setup request frame; and
adding identification information in the measurement setup request frame.

9. A sensing measurement setup method, applied to a first station, the method comprising:
receiving a measurement setup request frame; wherein the measurement setup request frame comprises first identification information, and the first identification information indicates whether the measurement setup request frame comprises a user identifier (USID) allocated by an AP to the first station.

10. The sensing measurement setup method according to claim 9, wherein the first identification information is carried in a sensing comeback information field and/or a sensing measurement parameter field of the measurement setup request frame.

11. The sensing measurement setup method according to claim 9 or 10, wherein the measurement setup request frame comprises second identification information, and the second identification information indicates whether the AP sets up a new sensing measurement procedure with the first station.

12. The sensing measurement setup method according to claim 11, wherein the first identification information indicates that the measurement setup request frame comprises the USID, and the second identification information indicates that the AP sets up a new sensing measurement procedure with the first station, then the USID is a subelement of a sensing measurement parameter element of the measurement setup request frame.

13. The sensing measurement setup method according to claim 12, wherein the first identification information indicates that the USID is not comprised in the measurement setup request frame, and the second identification information indicates that the AP sets up a new sensing measurement procedure with the first station, then the AP allocates a unique measurement identifier for the sensing measurement procedure.

14. The sensing measurement setup method according to claim 9, wherein before receiving the measurement setup request frame, the method comprises:
receiving a poll trigger frame; wherein the poll trigger frame comprises a user information field;
the user information field comprises a USID subfield and a sensing comeback subfield; the sensing comeback subfield identifies whether the AP sets up a new sensing measurement procedure with the station corresponding to the USID subfield.

15. The sensing measurement setup method according to claim 14, wherein after receiving the poll trigger frame, the method further comprises:
sending a sensing measurement procedure setup query frame, wherein the sensing measurement procedure setup query frame carries sensing measurement capability information of the first station.

16. The sensing measurement setup method according to any one of claims 9, 14 to 15, wherein the first identification information comprises at least one of:
receiving address (RA) information of the measurement setup request frame; and
adding identification information in the measurement setup request frame.

17. An electronic device, wherein the electronic device is an access point device (AP), and the electronic device comprises:
a determination module, configured to determine a measurement setup request frame; wherein the measurement setup request frame comprises first identification information, and the first identification information indicates whether the measurement setup request frame comprises a user identifier (USID) allocated by the AP to a first station; and
a sending module, configured to send the measurement setup request frame.

18. An electronic device, wherein the electronic device is a first station, and the electronic device comprises:
a receiving module, configured to receive a measurement setup request frame; wherein the measurement setup request frame comprises first identification information, and the first identification information indicates whether the measurement setup request frame comprises a user identifier (USID) allocated by an AP to the first station.

19. An electronic device, comprising a memory, a processor, and a computer program stored in the memory and executable on the processor, wherein when the processor executes the program, the method according to any one of claims 1 to 8 or the method according to any one of claims 9 to 16 is implemented.

20. A computer-readable storage medium, wherein a computer program is stored on the computer-readable storage medium, and when the computer program is executed by a processor, the method according to any one of claims 1 to 8 is implemented or the method according to any one of claims 9 to 16 is implemented.
